# EUROPEAN PATENT SPECIFICATION

(11) **EP 1 503 894 B1**
(45) Date of publication and mention of the grant of the patent: **23.08.2006**
(21) Application number: 03747457.4
(22) Date of filing: 02.05.2003
(51) Int. Cl.: B32B 11/02, B32B 11/08, E02B 17/00

(54) **COMPOSITE STRUCTURE**
VERBUNDKONSTRUKTION
STRUCTURE COMPOSITE

(30) Priority: 02.05.2002 EP 02253115
(43) Date of publication of application: 09.02.2005
(73) Proprietor: SHELL INTERNATIONALE RESEARCH MAATSCHAPPIJ B.V., 2596 HR Den Haag (NL)
(72) Inventor: DANIEL, Mervyn, Frank, Cheshire CH2 4NU (GB); MAJOOR, Joannes, Cornelis, Jozef, Emmanuel, NL-1031 CM Amsterdam (NL); MOOIWEER, Hendrik, Harm, NL-1031 CM Amsterdam (NL)
(86) International application number: PCT/EP2003/004741
(87) International publication number: WO 2003/092998

(56) References cited:
- WO-A-00/46164
- GB-A- 2 136 033

## Description

The present invention relates to a composite structure.

### Background of the Invention

Structures based upon a combination of steel and cement-based materials are well known in the construction industry. In addition to the common practice of improving load-bearing properties of concrete by means of steel reinforcement, more sophisticated structures have been devised for use in specialist applications that demand high performance characteristics, for example in off-shore applications.

An example of a structure designed to meet off-shore performance requirements, based upon steel and concrete, is described in GB-A 2136033, said structure comprising a pair of spaced apart steel skins, an array of steel members inter-connecting the two skins, and a layer of concrete filling or partially filling the space between the two skins. The structures of GB-A 2136033 are said to provide resistance against ship impacts and ice pressure.

However, whilst such materials show resistance to low impact collisions and gradually applied pressure, there is always a need for structures having improved characteristics, for example structures having improved high impact or blast resistance (e.g. for use in oil exploration, on drilling platforms or in hazardous manufacturing environments).

Therefore, it would be advantageous if there was provided a structure having a structural strength equal to or approaching that of known composite materials based upon steel and concrete and also having an improved resistance to high impact collisions and blasts.

### Statement of the Invention

It has now surprisingly been found that by incorporating into a composite structure a material comprising a specific type of asphaltenes-containing binder, the dual aim of structural strength and high impact resistance may be achieved.

Accordingly, the present invention provides a structure comprising two facing plates, wherein the two facing plates are positioned one on each side of a solid-state composition, which solid-state composition comprises in the range of from 70 to 99% by weight of solid particles, and in the range of from 30 to 1 % by weight of an asphaltenes-containing binder having a penetration of less than 15 dmm, as measured by ASTM D5 at 25°C, based on total weight of solid-state composition. 1 dmm is one tenth of a millimeter.

### Detailed description of the Invention

The structure of the present invention comprises a solid-state composition that is based on a specific type of asphaltenes-containing binder and which is positioned between two facing plates. It is the visco-elastic properties of the asphaltenes-containing binder that imparts a degree of elasticity to the structures of the present invention making them more resistant to high impact collisions and blasts. Whilst alternative binders may display visco-elastic properties, it is only by use of the asphaltenes-containing binder used in the present invention that a structure having good structural strength and high impact resistance may be obtained.

A further advantage of the asphaltenes-containing binder employed in the structure of the present: invention, compared to other visco-elastic materials, is that a structure comprising said binder is more resistant to high temperatures on account of the asphaltenes-containing binders' relatively high softening point.

The solid-state composition employed in the structure of the present invention comprises in the range of from 70 to 99% by weight of solid particles, and in the range of from 30 to 1 % by weight of an asphaltenes-containing binder having a penetration of less than 15 dmm, based on total weight of solid-state composition. Asphaltenes are constituents of bituminous materials which are soluble in carbon disulphide, but not in petroleum spirit. Typically, asphaltenes constitute 5% to 25% of a bituminous material (page 90 of the Shell Bitumen Handbook September 1991). The presence of asphaltenes can be established using test method IP143/96.

The asphaltenes-containing binder has a penetration of less than 15 dmm. The penetration of the asphaltenes-containing binder is measured according to ASTM D5 at 25°C. Preferably the asphaltenes-containing binder has a penetration in the range of from 1 dmm to less than 15 dmm. Preferably, the binder has a penetration of at most 10 dmm, more preferably less than 10 dmm and most preferably less than 8 dmm. Further, the binder preferably has a penetration of at least 1 dmm at 25 °C, more preferably at least 2 dmm, more preferably at least 4 dmm. Penetration values below 2 dmm can be measured by measuring penetration at 40 °C and subsequently extrapolating the results to 25 °C.

The asphaltenes-containing binder employed in the structure of the present invention preferably has a softening point measured according to the ring and ball test of ASTM D 36, of at least 50 °C, more preferably at least 70 °C, even more preferably at least 100 °C. Further, the binder preferably has a softening point of at most 157°C, more preferably at most 150 °C.

In a preferred embodiment of the present invention the structure comprises a solid-state composition wherein the asphaltenes-containing binder contains (i) from 15 to 95 % by weight, based on total binder, of asphaltenes, which asphaltenes contain at least 60% aromatic carbon, and (ii) from 5 to 85 % by weight, based on total binder, of further hydrocarbons, as determined by IP 143/96. The asphaltenes-containing binders of this embodiment are preferred as solid-state compositions comprising these binders retain their flexural strength on exposure to salt water. Accordingly, they are ideally suited for use in off-shore applications.

The percentage of aromatic carbon atoms present in the asphaltenes is measured by separating off the asphaltenes in the binder as described in IP 143/96, dissolving a sample of the asphaltenes in carbon disulphide or chloroform and assessing the percentage of aromatic carbon by ¹³C NMR.

Generally, the further hydrocarbons present in the above preferred binder, can contain up to 15 % by weight of atoms other than hydrogen and carbon, more specifically sulphur, nitrogen and oxygen, preferably at most 12 % by weight, most preferably at most 10 % by weight, based on further hydrocarbons.

Preferably, the asphaltenes-containing binder to be employed in the structure of the present invention contains at least 20 % by weight of asphaltenes, based on total binder. More preferably, the binder contains at least 25 % by weight of asphaltenes. The amount of asphaltenes is preferably up to 95 % by weight, more preferably up to 70 % by weight, more preferably up to 60 % by weight, more preferably up to 50 % by weight, more preferably up to 45 % by weight, most preferably at most 40 % by weight. The remainder of the asphaltenes-containing binder is further hydrocarbons.

The asphaltenes-containing binder employed in the structure of the present invention may be prepared in any manner known to those skilled in the art, provided that the binder obtained has the required hardness. Methods suitable for preparing asphaltenes-containing binders and solid-state compositions that may be utilised in accordance with the present inventions are described in WO 00/46164.

When the asphaltenes-containing binder is a binder containing (i) in the range of from 15 to 95 % by weight of asphaltenes containing at least 60 % aromatic carbon, and (ii) in the range of from 5 to 85 % by weight of further hydrocarbons, it may be conveniently prepared by subjecting hydrocarbons to thermal cracking. Preferably, a residual hydrocarbon fraction is subjected to thermal cracking. The thermally cracked product can be used as such, or in combination with any other hydrocarbon fraction as long as the required hardness is achieved.

The solid-state compositions preferably comprise in the range of from 2 to 20 % by weight of asphaltenes-containing binder, more preferably 3 to 15 %, even more preferably 4 to 10 % and most preferably 6 to 9 %, based on total solid-state composition.

The solid-state compositions employed in the structure of the present invention comprise in the range of from 70 to 99% by weight of solid particles, based on total solid-state composition. Preferably, the solid-state compositions comprise in the range of from 80 to 98 % by weight of solid particles, more preferably 85 to 97 %, even more preferably 90 to 96 %, and most preferably 92 to 94 %.

The solid particles may be chosen from a wide range of materials. A non-exhaustive list of solid particles which may be used includes mineral particles, cement, recycled asphalt, recycled tyres, crushed shells, fly ash, porous particles such as zeolite and perlite, spent catalyst, wood particles such as wood chips, and electrically conductive particles, e.g. graphite particles or petroleum coke particles. Preferred solid particles are mineral particles. Mineral particles that may be conveniently used include particles of clay, silt, limestones or quartz, preferred mineral particles being mineral particles comprising silica and/or alumina.

Solid particles having a size of less than 63 micrometers are known in the art as filler; particles having a particle size in the range of 63 micrometers to 2mm are known as sand; and particles having a particle size in the range of 2mm to 8mm are known as stones. Preferably, the solid particles in the solid-state compositions of the present invention are a combination of particles having a particle size of at most 63 micrometers (so-called filler) and particles having a particle size in the range from 63 micrometers to 2 mm (so-called sand) and particles having a particle size in the range from 2 to 8 mm, preferably from 4 to 8 mm (so-called stones), optionally in combination with particles having larger sizes. The particle sizes are measured,by sieving with sieves having openings of the indicated size. Preferably, the amount of each of filler, sand and stones is in the range from 10 to 50 % by weight, (the combination to total 100 % by weight) based on total amount of solid particles.

It is an important aspect of the present invention that the solid-state composition employed in the structure has a good strength. Accordingly, preferred solid-state compositions are those having a flexural strength of at least 1.0 N/mm², preferably at least 3.0 N/mm², more preferably at least 4.0 N/mm², even more preferably at least 5.0 N/mm², and most preferably at least 6.0 N/mm², as measured according to NEN 7000; a test of the "Nederlands Normalisatie Istituut, 2^{nd} edition, July, 1985".

Further, it is also preferred that the solid-state composition employed in the structure of the present invention has good compression strength, preferably having a compression strength of at least 5.0 N/mm², more preferably at least 10.0 N/mm², more preferably at least 15.0 N/mm², as measured according to ISO/R 836 of the European Federation of Manufacturers of Refractory products as revised in 1990, PRE/R 14-1.

One advantageous aspect of the present invention is that the void content of the solid-state compositions may be optimised with regard to the specific application for which the structure of the present invention is intended., Generally, for most applications it is preferred that the solid-state compositions have a void content of less than 3 %, more preferably less than 2 %, and most preferably less than 1 %, as determined according to the "Standard Regelgeving Advisering Wegenbouw", 1995, test 67. However, where it is desired to have a light weight structure, for example a structure which may be readily transported or repositioned on site, it may be preferable that the compositions have a high void content and are thus of low weight and density.

The structure of the present invention comprises two facing plates joined together. The facing plates are preferably parallel to one another. In a preferred embodiment of the present invention, the facing plates are joined together by a plurality of cross-members.

The facing plates and plurality of cross-members are preferably made from a high strength material. Most preferably the facing plates and the plurality of cross-members are made of steel.

The plurality of cross-members may conveniently be in the form of bars, tubes etc, and are preferably aligned perpendicular to the facing plates.

Preferably, each facing plate has a thickness in the range of from 2 to 32 mm, more preferably 3 to 20 mm, and most preferably 6 to 20 mm. Preferably, the facing plates are separated by a distance in the range of from 30 to 800 mm, more preferably 100 to 800 mm, and most preferably 150 to 800 mm. Preferably, where cross-members are employed, each of the cross-members is separated from its neighbouring cross-members by a distance in the range of from 10 to 80 times the thickness of the facing plates, more preferably 10 to 60 times, most preferably 20 to 40 times.

Accordingly, in one embodiment of the present invention each facing plate has a thickness in the range of from 2 to 32 mm, the facing plates are separated by a distance in the range of from 30 to 800 mm, and each of the cross-members is separated from its neighbouring cross-members by a distance in the range of from 10 to 80 times the thickness of the facing plates.

The width and the height of the structure may vary depending on the specific application for which it is intended. The structure may be prepared by any convenient means known in the art, for example by firstly assembling the facing plates joined together by the plurality of cross-members and then heating a required amount of solid-state composition to a temperature where it is free flowing and subsequently pouring this mixture into the space between the facing pates, where it sets on cooling.

In a preferred embodiment of the present invention, the facing plates of the structure comprise flat sheets of a suitable material, e.g. steel.

However, in an alternative embodiment the facing plates may be shaped to afford better resistance to external forces, for example curved inwards or outwards, or in a wave configuration. Further, in certain applications it may be convenient to employ a structure wherein the facing plates comprise a network of bars, or tubes etc., positioned on each side of the solid-state composition.

In a further embodiment of the present invention, the structure may comprise more than two facing plates, for example three or four facing plates, wherein a space between at least two of the facing plates is at least partially occupied by the solid-state composition of the present invention.

In a still further embodiment of the present invention, the structure may further comprise an additional layer of solid-state composition positioned on at least a part of an exterior face of one or more of the facing plates. Such an additional layer of solid-state composition may be advantageous in protecting other structural materials, such as steel, from corrosion, and providing a liquid tight seal on joins etc, on the surface of the structure. Moreover, when the structure of the present invention is to be used as protective barriers for roads or railways, a structure comprising such an additional layer of solid-state composition on an external surface has an added advantage with respect to conventional barriers in that the solid-state composition effectively dampens sound, thus reducing noise levels in surrounding areas.

One method by which the structure of the present invention may be very conveniently prepared is from pre-fabricated double-skin panels. In this method, a structure may be assembled on site by welding individual panels to one another.

Accordingly, the present invention further provides a pre-fabricated double-skin panel which comprises a structure comprising two facing plates, wherein the two facing plates are positioned one on each side of a solid-state composition, which solid-state composition comprises in the range of from 70 to 99% by weight of solid particles, and in the range of from 30 to 1 % by weight of an asphaltenes-containing binder having a penetration of less than 15 dmm, as measured by ASTM D5 at 25°C, based on total weight of solid-state composition, and wherein the facing plates are joined together by a plurality of cross-members.

Preferred dimensions and materials described above with regard to the structure of the present invention are similarly preferred with regard to the pro-fabricated double-skin panels of the invention. Preferred double-skin panels according to the present invention are panels having an individual panel width in the range of from 1.0 m to 2.0 m and an individual panel length in the range of from 3.5 m to 18.0m.

Double-skin composite panels which comprise a concrete filler are known, for example from WO 95/27109. The facing plates and cross members of the double-skin panels of the present invention may be assembled in an analogous manner to those described in WO 95/27109. However, in the present invention the panel interior is subsequently filled with a solid-state composition comprising an asphaltenes-containing binder having a penetration of less than 15 dmm.

A structure according to the present invention may conveniently be assembled from a number of individual double-skin panels, each panel being welded to its neighbouring panels. When a structure according to the present invention is assembled in this way, the solid-state composition may be introduced into the double-skin panels before they are welded to one another, or alternatively the panels may first be assembled and the solid-state composition subsequently introduced into the structure.

In a preferred embodiment of the present invention, the structure may further comprise a layer of asphaltenes-containing adhesive positioned between the facing plates and the solid-state composition. This increases the strength with which the solid-state composition is secured to the facing plates and prevents cracks forming in the composition around the steel-concrete interface. The asphaltenes-containing adhesive preferably comprises an asphaltenes-containing binder similar to, or most preferably identical to, that of the solid-state composition, but differs from the solid-state composition in that it comprises a higher proportion of binder to solid particles.

Accordingly, in a preferred embodiment the structure of the present invention may further comprise a layer of asphaltenes-containing adhesive positioned between a least a part of the two facing plates and the solid-state composition, which asphaltenes-containing adhesive comprises in the range of from 100 % to greater than 30 % of an asphaltenes-containing binder having a penetration of less than 15 dmm, and in the range of from 0 to less than 70 % by weight of solid particles, based on total weight of composition. In accordance with this embodiment, the asphaltenes-containing adhesive preferably comprises in the range of from 100 to 50 %, more preferably 100 to 75 % and most preferably 100 to 90 % by weight of asphaltenes-containing binder, and in the range of from 0 to 50 %, even more preferably 0 to 25 % and most preferably 0 to 10 % by weight of solid particles. In a particularly preferred embodiment, the asphaltenes-containing adhesive comprises 100% wt of the asphaltenes-containing binder.

Types of asphaltenes-containing binder and solid particles described hereinbefore with regard to the solid-state compositions of the invention are similarly preferred with regard to the asphaltenes-containing adhesive of this embodiment, with the exception that in the asphaltenes-containing adhesive it is preferred that the solid particles have an average particle size of less than 63 micrometers, as by using smaller particles thinner layers of adhesive may be applied. Preferably, the layer of asphaltenes-containing adhesive is less than 5 mm thick, more preferably less than 2 mm thick, even more preferably less than 1 mm thick.

The structure of the present invention is ideally suited for use in off-shore applications, for example on drilling platforms to protect against blasts/explosions and to protect staff areas. However, the structure may also be advantageously utilised in a wide range of civil engineering applications, for example as protective walls around refineries or chemical plants, or as protective barriers for roads or railways.

The present invention will be further understood from the following examples.

### Examples 1-4

The following examples compare the performance of concrete and a solid-state composition as employed in the composite structures of the present invention under high velocity impact conditions. Testing was performed by firing a projectile of known mass at samples of test material. The velocity of the projectile prior to impact was measured by means of infrared light screens positioned in front of the target. Further infrared light screens were positioned behind the target to measure the velocity of any projectile that perforated the material. Two types of projectile were used for the testing, a 5.56 SS109 Ball, weighing 4 grams, and a 7.62 mm Ball, weighing 9.7 grams. The testing was performed at room temperature (20-25 °C).

The testing targets consisted of slabs of either a solid-state composition according to the invention or a B60 concrete. The slabs were 0.60 x 0.60 m² and had a thickness of approximately 6 cm.

Test Target A was made of solid-state composition according to the invention and comprised 14.9 % wt of filler, 31.1 %wt of 0.63-3 mm aggregate, 45.7 % wt of 3-8 mm aggregate, and 8.3 % wt of asphaltenes-containing binder. The asphaltenes-containing binder was obtained by thermal cracking of a residual fraction of a crude of Middle East origin having a boiling point of 520 °C or more, and subsequently removing the light fractions by subjecting the product to vacuum flashing. The binder obtained had a boiling point of 520 °C or more under atmospheric conditions. The binder contained 25 %wt of asphaltenes (IP 143/96), had a penetration of 6-7 dmm at 25 °C (ASTM D5 at 25 °C) and had a ring and ball softening point of 90 °C (ASTM D 36). The asphaltenes had 65 % by weight of carbon atoms in aromatic rings.

Test Target B was made of B60 concrete and had a composition of 375 Kg/m³ of cement, 1820 Kg/m³ of aggregate, a water-cement factor of 0.5 and air content of 2.1 %; the grading of the aggregate being as follows, 0.25 mm, 7 %wt; 0.25-0.5 mm, 13 %wt; 0.5-1 mm 15 %wt; 1-2 mm, 15 %wt; 2-4 mm, 20 %wt; 4-8 mm, 30 %wt.

The results of the testing are shown in Table 1. From Table 1 it can be seen that the solid-state composition of the present invention is more effective at stopping the high velocity projectiles than conventional concrete. For conventional concrete, the 5.56 SS109 Ball (4.0 gram) perforated the target at a velocity of 955/963 m/s (comparative Example 2), whilst the compositions of the present invention stopped the projectile at a velocity of 959/961 m/s (Example 1). Moreover, whilst the heavier 7.62 mm Ball (9.7 gram) perforated both the test materials, the solid-state composition target (Example 3) slowed the projectile to a lower velocity than the concrete target (comparative Example 4).

**Table 1**

| Example | 1 | | 2 | | 3 | 4 |
|---|---|---|---|---|---|---|
| | | | (comp) | | | (comp) |
| Target | A | A | B | B | A | B |
| Projectile (g) | 4.0 | 4.0 | 4.0 | 4.0 | 9.7 | 9.7 |
| Impact Velocity(m/s) | 959 | 961 | 955 | 963 | 823 | 828 |
| End Velocity (m/s) | na | na | nr | 47 | 53 | 83 |
| Result | stop | stop | perf. | perf. | perf. | perf. |
| Energy (J) | 1839 | 1847 | 1824 | 1855 | 3285 | 3325 |

| | | | | | | |
|---|---|---|---|---|---|---|
| na = not applicable | | | | | | |
| nr = not recorded | | | | | | |
| perf. = perforated | | | | | | |

These results indicate that the solid-state composition.of the present invention provides a higher level of protection against high dynamic loadings, such as high velocity impacts, than concrete.

## Claims

1. A structure comprising two facing plates, wherein the two facing plates are positioned one on each side of a solid-state composition, which solid-state composition comprises in the range of from 70 to 99% by weight of solid particles, and in the range of from 30 to 1 % by weight of an asphaltenes-containing binder having a penetration of less than 15.10⁻⁴ m (15 dmm), as measured by ASTM D5 at 25°C, based on total weight of solid-state composition.

2. A structure as claimed in claim 1; wherein the facing plates are joined together by a plurality of cross-members.

3. A structure as claimed in claim 1 or claim 2, wherein the asphaltenes-containing binder contains (i) from 15 to 95 % by weight, based on total binder, of asphaltenes, which asphaltenes contain at least 60% aromatic carbon, and (ii) from 5 to 85 % by weight, based on total binder, of further hydrocarbons.

4. A structure as claimed in any one of claims 1 to 3, wherein the facing plates and the plurality of cross-members are made of steel.

5. A structure as claimed in any one of claims 1 to 4, wherein the facing plates are parallel to each other.

6. A structure as claimed in any one of claims 2 to 5, wherein the plurality of cross-members are each aligned perpendicular to the facing plates.

7. A structure as claimed in any one of claims 1 to 6, which further comprises a layer of asphaltenes-containing adhesive positioned between a least a part of the two facing plates and the solid-state composition, which asphaltenes-containing adhesive comprises in the range of from 100 % to greater than 30 % of an asphaltenes-containing binder having a penetration of less than 15 dmm, and in the range of from 0 to less than 70 % by weight of solid particles, based on total weight of composition.

8. A structure as claimed in any one of claims 2 to 7, wherein each facing plate has a thickness in the range of from 2 to 32 mm, the facing plates are separated by a distance in the range of from 30 to 800 mm, and each of the cross-members is separated from its neighbouring cross-members by a distance in the range of from 10 to 80 times the thickness of the facing plates.

9. A pre-fabricated double-skin panel which comprises a structure as claimed in claim 2.

## Patentansprüche

1. Konstruktion mit zwei einander zugekehrten Platten, bei welcher die beiden einander zugekehrten Platten je auf einer Seite einer Festkörperzusammensetzung angeordnet sind, welche Festkörperzusammensetzung im Bereich von 70 bis 99 Gew.-% feste Teilchen und im Bereich von 30 bis 1 Gew.-% eines Asphaltene enthaltenden Bindemittels mit einer Penetration von weniger als 15 x 10⁻⁴ m (15 dmm), bestimmt gemäß ASTM D5 bei 25°C, enthält, basierend auf dem Gesamtgewicht der Festkörperzusammensetzung.

2. Konstruktion nach Anspruch 1, bei welcher die einander zugekehrten Platten durch eine Vielzahl von Querelementen miteinander verbunden sind.

3. Konstruktion nach Anspruch 1 oder 2, bei welcher das Asphaltene enthaltende Bindemittel (i) von 15 bis 95 Gew.-%, basierend auf dem gesamten Bindemittel, Asphaltene enthält, welche Asphaltene zumindest 60% aromatischen Kohlenstoff enthalten, und (ii) von 5 bis 85 Gew.-%, basierend auf dem gesamten Bindemittel, weitere Kohlenwasserstoffe enthält.

4. Konstruktion nach einem der Ansprüche 1 bis 3, bei welcher die einander zugekehrten Platten und die Vielzahl von Querelementen aus Stahl bestehen.

5. Konstruktion nach einem der Ansprüche 1 bis 4, bei welcher die einander zugekehrten Platten zueinander parallel sind.

6. Konstruktion nach einem der Ansprüche 2 bis 5, bei welcher die Vielzahl von Querelementen jeweils senkrecht zu den einander zugekehrten Platten ausgerichtet sind.

7. Konstruktion nach einem der Ansprüche 1 bis 6, die ferner eine Lage aus Asphaltene enthaltendem Klebstoff enthält, der zwischen zumindest einem Teil der beiden einander zugekehrten Platten und der Festkörperzusammensetzung angeordnet ist, welcher Asphaltene enthaltender Klebstoff im Bereich von 100% bis mehr als 30% eines Asphaltene enthaltenden Bindemittels mit einer Penetration von weniger als 1,5 dmm enthält und im Bereich von 0 bis weniger als 70 Gew.-% feste Teilchen enthält, basierend auf dem Gesamtgewicht der Zusammensetzung.

8. Konstruktion nach einem der Ansprüche 2 bis 7, bei welcher jede der einander zugekehrten Platten eine Dicke im Bereich von 2 bis 32 mm hat, wobei die einander zugekehrten Platten durch einen Abstand im Bereich von 30 bis 800 mm getrennt sind, und jedes Querelement von benachbarten Querelementen durch einen Abstand im Bereich von 10 bis 80 mal der Dicke der einander zugekehrten Platten getrennt ist.

9. Vorgefertigtes doppelseitiges Paneel, welches eine Konstruktion nach Anspruch 2 aufweist.

## Revendications

1. Structure comprenant deux plaques en regard, dans laquelle les deux plaques en regard sont chacune positionnées sur chaque côté d'une composition à l'état solide, cette composition à l'état solide comprenant des particules solides dans la plage de 70 à 99% en poids et, dans la plage de 30 à 1% en poids, un liant contenant des asphaltènes, qui a une pénétration inférieure à 15.10⁻⁴ m (15 dmm), telle que mesurée par la norme ASTM D5 à 25°C, par rapport au poids total de la composition à l'état solide.

2. Structure selon la revendication 1, dans laquelle les plaques en regard sont jointes ensemble par une pluralité d'éléments traversants.

3. Structure selon la revendication 1 ou la revendication 2, dans laquelle le liant contenant les asphaltènes contient (i) 15 à 95% en poids d'asphaltènes par rapport au total du liant, les asphaltènes contenant au moins 60% de carbone aromatique, et (ii) 5 à 85% en poids d'autres hydrocarbures par rapport au total du liant.

4. Structure selon l'une quelconque des revendications 1 à 3, dans laquelle les plaques en regard et la pluralité d'éléments traversants sont formés d'acier.

5. Structure selon l'une quelconque des revendications 1 à 4, dans laquelle les plaques en regard sont parallèles l'une à l'autre.

6. Structure selon l'une quelconque ' des revendications 2 à 5, dans laquelle la pluralité d'éléments traversants sont chacun alignés perpendiculairement aux plaques en regard.

7. Structure selon l'une quelconque des revendications 1 à 6, qui comprend en outre une couche d'adhésif contenant des asphaltènes positionnée entre au moins une partie des plaques en regard et la composition à l'état solide, l'adhésif contenant les asphaltènes comprenant, dans la plage de 100% à plus de 30%, un liant contenant des asphaltènes ayant une pénétration de moins de 15 dmm et, dans la plage de 0 à moins de 70% en poids, des particules solides, par rapport au poids total de la composition.

8. Structure selon l'une quelconque des revendications 2 à 7, dans laquelle chacune des plaques en regard a une épaisseur dans la plage de 2 à 32 mm, les plaques en regard sont séparées d'une distance dans la plage de 30 à 800 mm et chacun des éléments traversants est séparé de ses éléments traversants voisins d'une distance dans la plage de 10 à 80 fois l'épaisseur des plaques en regard.

9. Panneau préfabriqué double-peau, qui comprend une structure selon la revendication 2.
